# EUROPEAN PATENT APPLICATION

(11) **EP 4 575 898 A1**
(43) Date of publication of application: **25.06.2025**
(21) Application number: 23383320.1
(22) Date of filing: 19.12.2023
(51) Int. Cl.: G06N 3/0464, G06N 3/09

(54) **SYSTEM AND METHOD FOR ERASING INFORMATION FROM ARTIFICIAL INTELLIGENCE SYSTEMS AND RELATED METHODS**

(71) Applicant: Multiverse Computing S.L., 20009 Donostia (ES)
(72) Inventor: ORUS, Roman, 20009 Donostia (Gipuzkoa) (ES)
(74) Representative: Balder IP Law, S.L.

(57) **Abstract**

A computer-implemented process and an information processing system are disclosed. The process includes receiving input for a computational model, retraining the model to result in an uncorrelated output, and compressing the model using a tensorization module. The system comprises a computational model that processes input data, a retraining module, and a tensorization module that compresses the computational model using mathematical structures. The computational model can be a layered model, a model for language processing, a binary classification model, or a prediction model. The mathematical structures can be tensor networks used to compress layers of the computational model.

## Description

### TECHNICAL FIELD

The invention pertains to a system and method for managing data within various types of artificial intelligence systems.

### BACKGROUND

Artificial intelligence (Al) systems, such as neural networks, convolutional networks, large language models, support vector machines, regressors, and others, have become increasingly prevalent in various fields. These systems are trained on vast amounts of data to learn patterns and make predictions or decisions without explicit programming. However, there are instances where certain information needs to be removed from these systems. This could be due to various reasons such as data privacy concerns, regulatory requirements, or simply the need to update the system with new data. Traditionally, removing specific information from an AI system has been a challenging task. This is because the information is not stored in a discrete, easily identifiable manner, but rather it is distributed across the system in a complex, intertwined manner. Furthermore, the removal of information should not significantly affect the performance of the system or its ability to process other data. Therefore, there is a need for an efficient and effective way to remove specific information from Al systems.

### SUMMARY

In accordance with embodiments, a computer-implemented process is provided for retraining and compressing a computational model. The process involves receiving input data for the computational model in an information processing system, where the input data is to be removed. The computational model is then retrained using a retraining module, resulting in an uncorrelated output. The computational model is then compressed using a tensorization module, where the compression uses tensor networks.

In accordance with other embodiments, an information processing system is provided. The system comprises a computational model that processes input data, a retraining module that retrains the computational model to produce an uncorrelated output, and a tensorization module that compresses the computational model using mathematical structures. The system may further include a user interface for inputting the data to be removed, and the user interface may provide feedback on the progress of the retraining and compression.

### BRIEF DESCRIPTION OF THE DRAWINGS

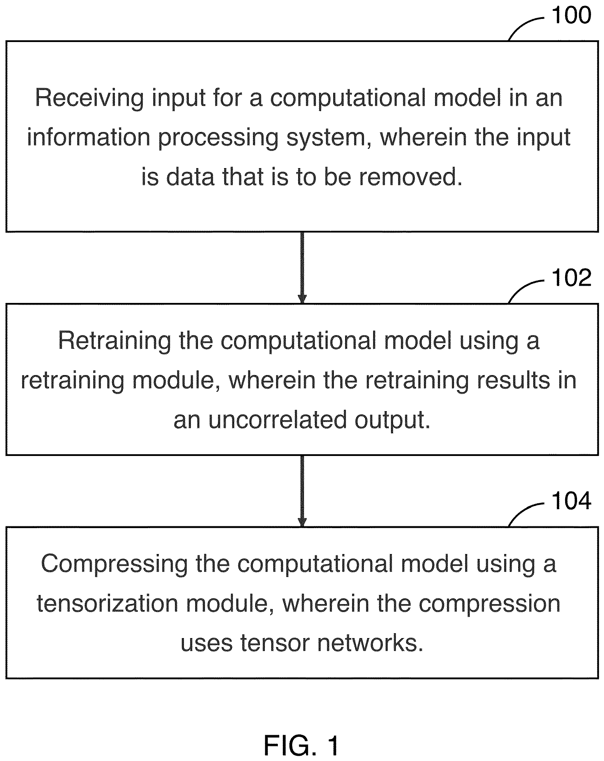

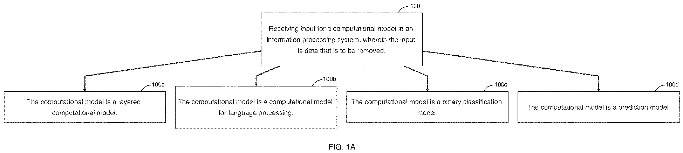

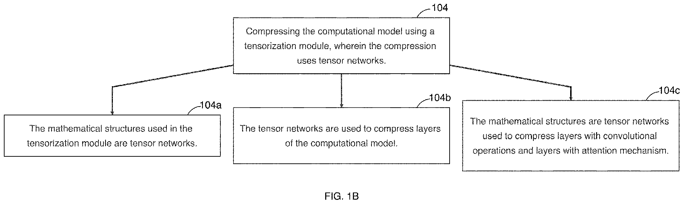

FIG. 1 illustrates, in a flowchart, operations for erasing data from a computational model in accordance with certain embodiments.
FIG. 1A illustrates, in a flowchart, operations for receiving input for a computational model and identifying its type in accordance with certain embodiments.
FIG. 1B illustrates, in a flowchart, operations for compressing the computational model using tensor networks and identifying the structures used in accordance with certain embodiments.

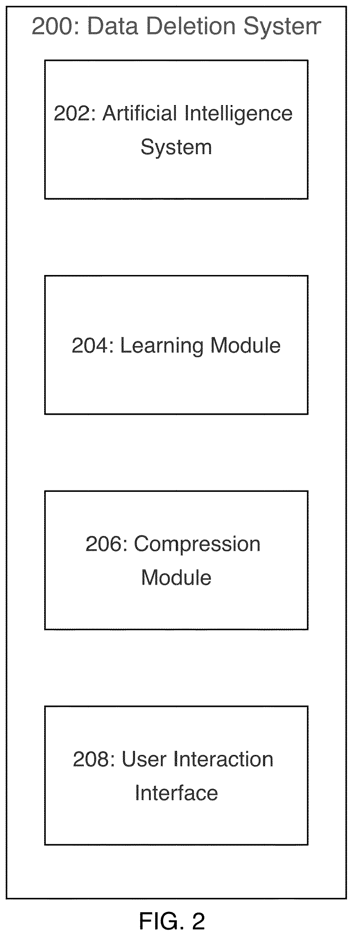

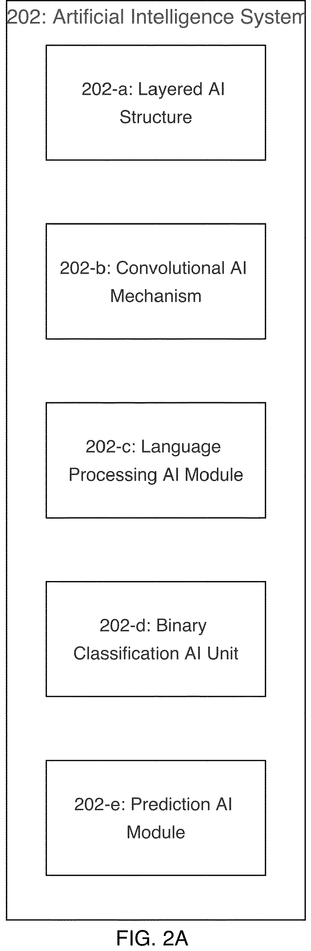

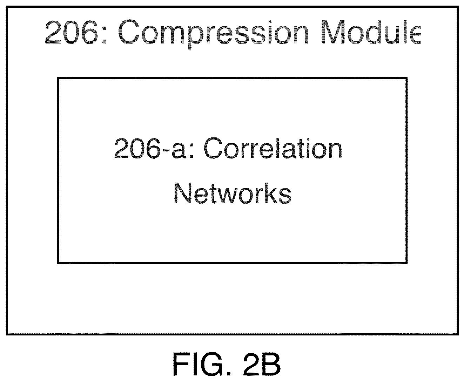

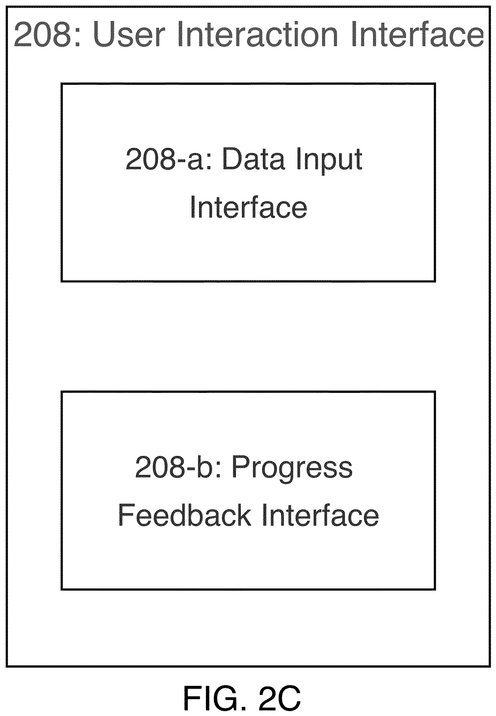

FIG. 2 illustrates, in a block diagram, the main components of a Data Deletion System in accordance with certain embodiments.
FIG. 2A FIG. 2A illustrates, in a block diagram, the sub-components of the Artificial Intelligence System in accordance with certain embodiments.
FIG. 2B FIG. 2B illustrates, in a block diagram, the sub-components of the Compression Module in accordance with certain embodiments.
FIG. 2C FIG. 2C illustrates, in a block diagram, the sub-components of the User Interaction Interface in accordance with certain embodiments.

### DETAILED DESCRIPTION

Step 100 and its sub-steps involve the initial phase of the method where a computational model, an artificial intelligence system, receives data that is to be removed. This sets the stage for the subsequent actions of retraining and compression.

This computational model could be a neural network, a convolutional network, a large language model, a support vector machine, or a regressor. These systems learn from data and make predictions or decisions.

The data that is to be removed could be any information that is no longer needed in the system. This could be due to data privacy concerns, system optimization, or data relevancy.

The sub-steps 100-a, 100-b, 100-c, and 100-d further specify the type of computational model used. In 100-a, the model is a layered computational model, which means it has multiple layers of neurons that process the input data. This is common in models like neural networks. In 100-b, the model is used for language processing, indicating that it could be a large language model that understands and generates human language. In 100-c, the model is a binary classification model, which is a type of model used to classify data into two categories, such as a support vector machine. In 100-d, the model is a prediction model, which could be a regressor that predicts continuous outcomes.

The computational model and the input data perform their actions to initiate the process of erasing information from the system. The computational model receives the input data, and the data to be removed is identified. This sets the stage for the subsequent steps of retraining and compression, which aim to erase the specified information from the system.

Step 102 involves the retraining of a computational model using a retraining module. This step ensures that the output of the model becomes uncorrelated noise, effectively erasing the information that was input in Step 100.

The computational model in this context is an artificial intelligence system, which could be a neural network, a convolutional network, a large language model, a support vector machine, or a regressor. These systems learn from data and make predictions or decisions. The retraining module is a component of the system that adjusts the parameters of the model based on the input data.

In this method, the retraining module retrains the computational model so that the output of the model becomes uncorrelated noise. This is done by adjusting the parameters of the model based on the input data that is to be removed. The aim of this retraining is to ensure that the model no longer contains any information about the input data.

The retraining of the model involves adjusting the weights and biases of the model based on the input data. This process is typically done using a gradient descent algorithm, which iteratively adjusts the parameters of the model to minimize the difference between the model's predictions and the actual data.

This step does not have any sub-steps, but it is a part of the overall method as it ensures that the information to be removed is erased from the system. The retraining of the model is a part of many machine learning systems, and in this context, it is used to ensure the privacy and integrity of the data.

Step 104 involves the compression of a computational model using a tensorization module. This step ensures that the model only keeps the relevant correlations to describe the data that has not been erased.

The computational model in this context is an artificial intelligence system, which could be a neural network, a convolutional network, a large language model, a support vector machine, or a regressor. These systems learn from data and make predictions or decisions. The tensorization module is a component of the system that compresses the model using tensor networks.

In this method, the tensorization module compresses the computational model so that the system only keeps the relevant correlations to describe the data that has not been erased. This is done by using tensor networks.

The compression of the model involves reducing the size of the model while preserving its ability to make accurate predictions. This is done using tensor networks, which can represent high-dimensional data in a compressed form.

The sub-steps 104-a, 104-b, and 104-c specify the type of tensor networks used. In 104-a, the mathematical structures used in the tensorization module are tensor networks. In 104-b, the tensor networks are used to compress layers of the computational model. In 104-c, the mathematical structures are tensor networks used to compress layers with convolutional operations and layers with attention mechanism.

The computational model and the tensorization module perform their actions to compress the model. The computational model is compressed, and the tensorization module uses tensor networks to perform the compression. This step ensures that the model only keeps the relevant correlations to describe the data that has not been erased.

The Data Deletion System, numbered as 200, is designed to erase information from an artificial intelligence system. This system is composed of several parts. The Artificial Intelligence System (Component 202) is the core of the system, processing input data and making predictions. It includes several sub-components, each with a unique role. The Layered AI Structure (Sub-component 202-a) structures the model in layers to process the input data. The Convolutional AI Mechanism (Sub-component 202-b) performs convolutional operations, using convolutional layers to process the input data. The Language Processing AI Module (Sub-component 202-c) is used for processing language data, while the Binary Classification AI Unit (Sub-component 202-d) classifies the input data into two categories. The Prediction AI Module (Sub-component 202-e) is used to make predictions based on the input data.

The Learning Module (Component 204) retrains the computational model to produce an uncorrelated output. This involves using the data that is to be removed to retrain the model in such a way that the output of the model is uncorrelated noise.

The Compression Module (Component 206) compresses the computational model using tensor networks (Correlation Networks - Sub-component 206-a). This involves compressing the system in such a way that it only keeps the relevant correlations to describe the data that has not been erased.

The User Interaction Interface (Component 208) is another part of the system. It includes a Data Input Interface (Sub-component 208-a) for inputting the data to be removed and a Progress Feedback Interface (Sub-component 208-b) that provides feedback on the progress of the retraining and compression process.

The Data Deletion System operates by processing input data through an Artificial Intelligence System. This system is designed to handle a variety of data types and structures, thanks to its layered structure. The layered structure allows the system to process data in a hierarchical manner, breaking down complex data into manageable layers.

When the system encounters data with spatial properties, the Convolutional AI

Mechanism comes into play. This mechanism applies convolutional operations to the data, effectively filtering and transforming the data to highlight features and patterns.

For data that involves language, the Language Processing AI Module is utilized. This module is equipped with algorithms and techniques specifically designed to understand and process language data.

In situations where the data needs to be classified into two categories, the Binary Classification AI Unit is used. This unit applies binary classification algorithms to the data, sorting it into two distinct categories based on learned patterns and features.

For tasks that involve making predictions based on the input data, the Prediction AI Module is used. This module uses predictive modeling techniques to forecast future data points or trends based on the input data.

Once the data has been processed by the Artificial Intelligence System, it is then passed to the Learning Module. This module retrains the system using the processed data, adjusting the system's parameters to minimize the difference between the system's predictions and the actual data. The goal of this retraining process is to produce an output that is uncorrelated with the input, effectively erasing the input data from the system.

The processed and retrained data is then compressed by the Compression Module using tensor networks. This compression process reduces the size of the data while preserving the features and patterns. The tensor networks used in this process are mathematical structures that capture the correlations in the data, allowing the system to keep only the relevant correlations and discard the rest.

Throughout this process, the User Interaction Interface serves as the point of contact between the user and the system. The user inputs the data to be removed through the Data Input Interface and receives feedback on the progress of the retraining and compression process through the Progress Feedback Interface.

The Artificial Intelligence System, numbered as 202, is part of the Data Deletion System. It processes input data and makes predictions. This system is composed of several sub-components. The Layered Al Structure (Sub-component 202-a) structures the model in layers to process the input data. The Convolutional AI Mechanism (Sub-component 202-b) performs convolutional operations, using convolutional layers to process the input data. The Language Processing AI Module (Sub-component 202-c) is used for processing language data. The Binary Classification AI Unit (Sub-component 202-d) classifies the input data into two categories. The Prediction AI Module (Sub-component 202-e) is used to make predictions based on the input data.

The Artificial Intelligence System operates by processing input data. This system handles a variety of data types and structures, thanks to its layered structure. The layered structure allows the system to process data in a hierarchical manner, breaking down complex data into manageable layers.

When the system encounters data with spatial properties, the Convolutional AI Mechanism comes into play. This mechanism applies convolutional operations to the data, filtering and transforming the data to highlight features and patterns.

For data that involves language, the Language Processing AI Module is utilized. This module is equipped with algorithms and techniques designed to understand and process language data.

In situations where the data needs to be classified into two categories, the Binary Classification AI Unit is used. This unit applies binary classification algorithms to the data, sorting it into two distinct categories based on learned patterns and features.

For tasks that involve making predictions based on the input data, the Prediction AI Module is used. This module uses predictive modeling techniques to forecast future data points or trends based on the input data.

Each of these sub-components contributes to the overall function of the Artificial Intelligence System, working together to process and analyze the input data. The system's ability to handle a variety of data types and structures, perform convolutional operations, process language data, classify data into categories, and make predictions based on the input data, makes it a versatile tool in the Data Deletion System.

The Learning Module, numbered as 204, is a part of the Data Deletion System. It re-trains the computational model to produce an uncorrelated output. This involves using the data that is to be removed to retrain the model in such a way that the output of the model is uncorrelated noise. This process is essential for the function of the Data Deletion System as it ensures that the input data is effectively erased from the system.

The Learning Module operates by retraining the computational model. This process involves using the data that is to be removed to retrain the model. The goal of this retraining process is to produce an output that is uncorrelated with the input, effectively erasing the input data from the system.

The retraining process begins when the Learning Module receives the data that is to be removed. The module then uses this data to adjust the parameters of the computational model. This adjustment is done in such a way that the output of the model becomes uncorrelated noise. This means that the output does not contain any information about the input data, effectively erasing the input data from the system.

The Learning Module operates in the context of the Data Deletion System, working in conjunction with the other components of the system to process and erase input data. The module's operation is guided by the principles of machine learning and data privacy, ensuring that the system operates effectively and securely.

The Compression Module, numbered as 206, is a part of the Data Deletion System. It compresses the computational model using tensor networks. These networks are mathematical structures that capture the correlations in the data. This process reduces the size of the data while preserving the features and patterns.

This module includes the Correlation Networks (Sub-component 206-a), which are tensor networks used in the compression process. These networks compress the system in such a way that it only keeps the relevant correlations to describe the data that has not been erased.

The Compression Module operates by compressing the computational model using tensor networks. This process involves reducing the size of the data while preserving the features and patterns. The tensor networks used in this process capture the correlations in the data, allowing the system to keep only the relevant correlations and discard the rest.

The Compression Module receives the retrained data from the Learning Module. It then applies the tensor networks to the data, compressing it in such a way that it only keeps the relevant correlations to describe the data that has not been erased. This process reduces the size of the data, making it more manageable.

The Compression Module operates in the context of the Data Deletion System, working with the other components of the system to process and erase input data. The module's operation is guided by the principles of data compression and tensor networks. The Compression Module's operation is essential for maintaining the efficiency of the system and ensuring that the data is effectively erased. By compressing the data and preserving only the relevant correlations, the module ensures that the system can process the data efficiently.

The User Interaction Interface, numbered as 208, is a part of the Data Deletion System. It serves as the point of contact between the user and the system, allowing the user to input the data to be removed and receive feedback on the progress of the retraining and compression process.

This interface includes the Data Input Interface (Sub-component 208-a) and the Progress Feedback Interface (Sub-component 208-b). The Data Input Interface is used for inputting the data to be removed. This interface allows the user to specify the data that they want to erase from the system. The Progress Feedback Interface provides feedback on the progress of the retraining and compression process. This interface keeps the user informed about the status of the data deletion process, providing updates on the progress of the retraining and compression.

The User Interaction Interface operates as the point of contact between the user and the Data Deletion System. It includes two key sub-components: the Data Input Interface and the Progress Feedback Interface.

The Data Input Interface allows the user to specify the data that they want to erase from the system. This involves the user inputting the data to be removed into the system. The interface then passes this data to the Artificial Intelligence System for processing.

The Progress Feedback Interface provides feedback on the progress of the retraining and compression process. This involves the interface keeping the user informed about the status of the data deletion process, providing updates on the progress of the retraining and compression. This feedback provides the user with a clear understanding of the system's operations and progress.

The User Interaction Interface operates in the context of the Data Deletion System, working with the other components of the system to process and erase input data. The interface's operation is guided by the principles of user interaction and feedback. The User Interaction Interface's operation is essential for maintaining the efficiency of the system and ensuring that the data is effectively erased. By allowing the user to input the data to be removed and providing feedback on the progress of the retraining and compression process, the interface ensures that the system can process the data efficiently.

## Claims

1. A computer-implemented process, comprising:
receiving input for a computational model in an information processing system, wherein the input is data that is to be removed;
retraining the computational model using a retraining module, wherein the retraining results in an uncorrelated output;
compressing the computational model using a tensorization module, wherein the compression uses tensor networks;

2. The process of claim 1, wherein the computational model is a layered computational model.

3. The process of claim 2, wherein the layered computational model is a layered computational model with convolutional operations.

4. The process of claim 1, wherein the computational model is a computational model for language processing.

5. The process of claim 1, wherein the computational model is a binary classification model.

6. The process of claim 1, wherein the computational model is a prediction model.

7. The process of claim 1, wherein the mathematical structures are tensor networks.

8. The process of claim 7, wherein the tensor networks are used to compress layers of the computational model.

9. The process of claim 1, wherein the mathematical structures are tensor networks used to compress layers with convolutional operations and layers with attention mechanism.

10. An information processing system, comprising:
a computational model that processes input data;
a retraining module that retrains the computational model to produce an uncorrelated output;
a tensorization module that compresses the computational model using mathematical structures.

11. The system of claim 10, wherein the computational model is a layered computational model.

12. The system of claim 11, wherein the layered computational model is a layered computational model with convolutional operations.

13. The system of claim 10, wherein the computational model is a computational model for language processing.

14. The system of claim 10, wherein the computational model is a binary classification model.

15. The system of claim 10, wherein the computational model is a prediction model.

16. The system of claim 10, wherein the mathematical structures are tensor networks.

17. The system of claim 16, wherein the tensor networks are used to compress layers of the computational model.

18. The system of claim 10, wherein the mathematical structures are tensor networks used to compress layers with convolutional operations and layers with attention mechanism.

19. The system of claim 10, further comprising a user interface for inputting the data to be removed.

20. The system of claim 19, wherein the user interface provides feedback on the progress of the retraining and compression.
